# EUROPÄISCHE PATENTSCHRIFT

(11) **EP 0 907 547 B1**
(45) Veröffentlichungstag und Bekanntmachung des Hinweises auf die Patenterteilung: **30.08.2000**
(21) Anmeldenummer: 98928075.5
(22) Anmeldetag: 26.03.1998
(51) Int. Cl.: B62J 7/06

(54) **GEPÄCKTRÄGER FÜR GEFEDERTE EINSPURFAHRZEUGE**
LUGGAGE CARRIER FOR SINGLE TRACK VEHICLES WITH SUSPENSION
PORTE-BAGAGES POUR VEHICULES A VOIE UNIQUE SUSPENDUS

(30) Priorität: 02.04.1997 DE 19713553
(43) Veröffentlichungstag der Anmeldung: 14.04.1999
(73) Patentinhaber: Artmann, Ulrich, 50670 Köln (DE)
(72) Erfinder: Artmann, Ulrich, 50670 Köln (DE)
(74) Vertreter: Hublé, Jörn R.
(86) Internationale Anmeldenummer: DE9800882
(87) Internationale Veröffentlichungsnummer: WO9843870

(56) Entgegenhaltungen:
- DE-A- 3 601 387
- DE-A- 3 612 311
- FR-A- 384 335
- FR-A- 604 363

## Beschreibung

Die Erfindung bezieht sich auf eine Anordnung eines Gepäckträgers an einem gefederten Einspurfahrzeug gemäß der im Oberbegriff des Patentanspruches 1 bezeichneten Art.

Eine derartige Anordnung ist aus der DE-A-3612311 bekannt und besteht im allgemeinen aus den Auflagern und Anbringungen für das Gepäck, dem Tragrahmen und den Befestigungselementen an dem Fahrzeug, d.h. der Verbindung zwischen Tragrahmen und Fahrzeug.

Gepäckträger dienen der Beförderung von Gepäck und Kindern in Verbindung mit einem Kindersitz. Sie befinden sich vorne oder hinten, im allgemeinen dicht über und/oder dicht neben dem Rad.

Gepäckträger für ungefederte Fahrräder, wie beispielsweise der DE-A-3601387 zu entnehmen, leiten im allgemeinen die Hauptlast direkt in die Radnabe oder in eine Bereich nahe der Radnabe ein. Der Kraftfluß ist unmittelbar vom Gepäck durch den Gepäckträger in die Radnabe. Eine üblicherweise zweite Befestigungsebene verbindet den hinteren Gepäckträger mit dem Fahrzeugrahmen, den vorderen Gepäckträger mit der Vorderradgabel. Hier werden im Allgemeinen lediglich stabilisierende Kräfte übertragen. Diese Befestigungsform stellt im Allgemeinen auch bei konstruktiv einfachen Gepäckträgern eine sichere und belastbare Form der Gepäckbeförderung dar. Der Kindertransport, üblicherweise mittels Kindersitz, ist trotz hohem Schwerpunkt möglich.

Bei gefederten Systemen, wie beispielsweise in der DE-A-3612311 dargestellt, kann üblicherweise, bedingt durch die Eigenbewegung des Rades und der Radaufhängung relativ zum Fahrzeugrahmen, eine Anbindung des Gepäckträgers in reduzierter Form erfolgen. Entweder ist der Gepäckträger dann lediglich am
1. gefederten Teil des Fahrzeugs, d.h. Rahmen (hinten) bzw. Gabelkopf (vorne) oder lediglich im
2. ungefederten Fahrzeugbereich, im Bereich der Radaufhängung befestigt.

Das heißt, im Fall 1, nimmt der Kraftfluß von Gepäck ausgehend den Umweg horizontal zum Fahrzeugrahmen bzw. Gabelkopf, von dort durch das Bauteil zur Radaufhängung, durch die Radaufhängung in die Radnabe. Die bei diesen Umstände nötige Befestigungsform stellt im Allgemeinen, auch bei konstruktiv aufwendigen Gepäckträgern keine sichere und belastbare Form der Gepäckbeförderung dar. Geringe mögliche Gepäcklasten und Neigung zu Instabilität sind die Folgen. Im Fall 2, wird die ungefederte Klasse mit der Gepäckmasse beaufschlagt. Dies bedeutet, daß zum einen das Gepäck bzw. das Kind ungefedert den Fahrbahnstößen ausgesetzt ist, zum anderen wird die ungefederte Masse erhöht, und reduziert die Funktionalität des gefederten Fahrzeugs.

Die Aufgabe der Erfindung besteht in der Entwicklung eines Gepäckträgers, der die oben aufgeführten Nachteile beseitigt, welcher bewegungsgleich mit dem gefederten Teil des Fahrzeugs verbunden ist und stabilisierend mit dem beweglichen Teil der Radaufhängung verbunden ist, wobei die Federungsbewegung der Radaufhängung unbeeinflußt bleibt. Es sollen die Vorteile einer Federung im Rahmen der Gepäckmitnahme genutzt werden, bei gleichzeitigem Ausschluß der üblicherweise in Kauf zu nehmenden Nachteile.

Erfindungsgemäß wird diese Aufgabe durch die Merkmale des Anspruchs 1 gelöst. Es ist vorgesehen, daß auf der gefederten Seite des Fahrzeugs eine bewegungsgleiche Ankoppelung des Gepäckträgers an das Fahrzeug realisiert ist und auf der ungefederten Seite des Fahrzeugs eine bewegliche Ankopplung relativ zur Achsaufhängung umgesetzt ist, wobei hier die Lagerung senkrecht zur Bewegungsrichtung fixierend ausgeführt ist.

Die Erfindung nutzt die Vorteile einer Fahrzeugfederung, sie nimmt die in der Praxis üblichen Lasten, wie Gepäck und/oder kindersitz mit Kind auf, wobei die Lasten ortsfest mit der gefederten Seite des Fahrzeugs und beweglich mit der ungefederten Radaufhängung verbunden sind.

Der Gepäckträger ist ortsfest mit dem gefederten Bereich des Fahrzeugs und beweglich mit der Radaufhängung verbunden. Die vom Fahrzeug aufzunehmenden Gewichts- und Trägheitskräfte des Gepäcks teilen sich auf. Zum einen in eine hauptsächlich die statische Last übertragende Kraft A, auf den gefederten Teil des Fahrzeugs, zum anderen auf die Kraft B, eingeleitet in die Achsaufhängung. Die Kraft A erhöht die gefederten Massenkräfte. Das Verhältnis von gefederter zu ungefederter Masse verändert sich positiv, die Federung arbeitet effizienter. Die Kraft B wirkt direkt auf den Achsbereich ein, dadurch ergibt sich
1. eine stabilisierende Wirkung auf das Fahrverhalten und
2. eine Steigerung der möglichen Lasten bei gleichzeitiger
3. Verringerung des Konstruktionsaufwandes und des Gewichts.

Die Erfindung macht sich positiv im Hinblick auf den Gewinn von Stabilität, Sicherheit, Belastbarkeit und Komfort bemerkbar. Es ergeben sich im einzelnen folgende Vorteile:
- die Stoßbelastungen verringern sich;
- der Fahrkomfort nimmt zu:
   - für die lenkende Person sowie
   - für das mitfahrende Kind;
- das Fahrverhalten verbessert sich;
- das Fahrzeug wird schonender beansprucht:
   - die Betriebssicherheit nimmt zu,
   - leichtere Konstruktionen sind möglich;
- das Gepäck wird schonender beansprucht;
- der Reifendruck kann ohne Komfortverlust erhöht werden:
   - die Rollreibung verringert sich,
   - das Fahrzeug läuft leichter.

Die Erfindung wird nachstehend an einem Ausführungsbeispiel näher erläutert.
- Fig. 1: zeigt eine gefederte Vorderradgabel eines Fahrrades.
- Fig.2: zeigt die Wirkweise der Erfindung am Beispiel eines vorne gefederten Fahrrads.

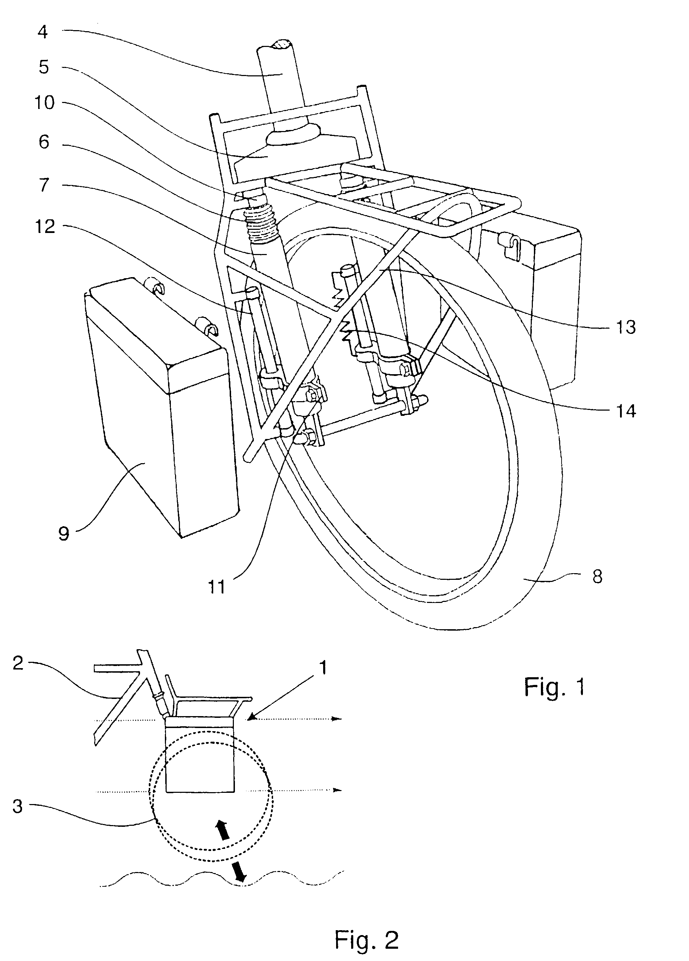

Die Erfindung mit angehängtem Gepäck ist in Fig. 2 dargestellt und mit dem Bezugszeichen 1 bezeichnet. Der Frontbereich des Fahrrades ist mit 2 bezeichnet.

Das federnd schwingende, den Fahrbahnunebenheiten ausweichende angedeutete Vorderrad ist mit 3 bezeichnet. Wie idealisiert gezeigt, bleibt während der Fahrt über eine unebene Fahrbahn der Fahrradrahmen, der Gabelkopf, der Gepäckträger und das Gepäck in einer entkoppelten, ruhigen Lage, während das Rad schwingend den Unebenheiten ausweicht.

Das in Fig. 1 teilweise dargestellte Fahrrad weist ein Steuerrohr 4, einen Gabelkopf 5 und ein Vorderrad mit einer Achse 8 auf, wobei das Vorderrad über eine Teleskopgabel gefedert ist, die Standrohre mit Faltenbälgen 6 und Tauchrohre 7 aufweist. Nach der Art einer Explosionszeichnung sind ebenfalls Gepäcktaschen 9 dargestellt, die an den Gepäckträger anhängbar sind.

Die hier oben angeordneten ersten Gepäckträgeranschlüsse 10 stellen die unbewegliche Verbindung des Gepäckträgers mit der gefederten Seite des Fahrrades her. Die unteren zweiten Gepäckträgeranschlüsse 11 sind mit der ungefederten Seite des Fahrrades über gleitende Lagerungen in Schiebeprofilen 12 mit Tauchrohren 7 der Teleskopgabel verbunden. Der Gepäckträger weist einen Gepäckträgerrahmen 13 auf. Die unteren Anschlüsse 11 sind auf der Seite der Tauchrohre 7 als Schellen ausgeführt, auf der Seite des Schiebesitzes sind sie als Lager ausgeführt, die eine axiale Verschiebung, parallel zur Federungsbewegung, zulassen und senkrecht zu Federungsbewegung fixierend lagern. Um eine spielfreie und reibungsarme Führung der Schiebeprofile 12 durch die zweiten Gepäckträgeranschlüsse 11 zu gewährleisten sind die Lagerkörper kardanisch beweglich eingebaut. Fertigungstoleranzen werden ebenso wie betriebsbedingte Verwindungen richtungsanpassend kompensiert.

Durch mindestens eine Feder 14, hier als Druckfeder gezeigt, kann die Gewichtskraft des Gepäcks, teilweise oder vollständig, unmittelbar in den ungefederten Radbereich eingeleitet werden. Somit ist ein Entlastung der Federbeinelemente (zwischen 6 und 7) und ein damit verbundener Niveauausgleich der Fahrzeugfederung möglich.

Im oben beschriebenen Ausführungsbeispiel liegt der obere Befestigungspunkt der ersten Gepäckträgeranschlüsse jeweils nahe der Wirkungslinie des Schiebesitzes. Während in dieser Ausführungsform der obere Gepäckträgeranschluß den Gepäckträger in alle Richtungen mit dem Fahrzeug verbindet, verhindert der untere Anschlußpunkt bzw. die unteren Anschlußpunkte wirksam ein Verdrehen um den oberen Befestigungspunkt durch Aufnahme der Biegemomente um diesen Punkt.

Bei anderen geometrischen Anordnungen kann diese Lagerung der zweiten Gepäckträgeranschlüsse mit nur einem Freiheitsgrad zu einer Behinderung der Kinematik des Einfedervorganges führen. Insbesondere wenn der Gepäckträger im hinteren Bereich des Fahrzeuges angeordnet und durch die ersten Gepäckträgeranschlüsse statisch bereits fixiert ist, würde diese Anordnung zu Eigenspannungen und zu einer Beeinträchtigung der Funktionalität führen. Zur Abhilfe wird bei dieser Ausgestaltung der untere zweite Gepäckträgeranschluß zusätzlich zur Verschiebbarkeit in Richtung der Einfederbewegung senkrecht zur Einfederrichtung und senkrecht zur Radachse verschiebbar gelagert. Hieraus resultiert eine freie Verschiebbarkeit des unteren Befestigungspunktes durch die zweiten Gepäckträgeranschlüsse in die Richtungen innerhalb der Radebene. In diesem Fall übernehmen die zweiten Gepäckträgeranschlüsse eine Fixierung des Gepäckträgers in zur Fahrtrichtung, das heißt zur Radebene rechtwinklige Richtung.

### Bezugszeichenliste:

- 1: Gepäckträger mit angehängtem Gepäck
- 2: Frontbereich eines Fahrrades
- 3: federnd schwingendes Vorderrad
- 4: Steuerrohr
- 5: Gabelkopf
- 6: Standrohre mit Faltenbälgen
- 7: Tauchrohre der Teleskopgabel
- 8: Vorderrad mit Achse
- 9: Gepäcktaschen
- 10: obere Gepäckträgeranschlüsse
- 11: untere Gepäckträgeranschlüsse
- 12: Schiebeprofile
- 13: Rahmen des Gepäckträgers
- 14: Feder

## Patentansprüche

1. Anordnung eines Gepäckträgers an einem gefederten Einspurfahrzeug, vorzugsweise an einem gefederten Fahrrad, mit einem Gepäckträgerrahmen mit Gepäckaufnahme und zumindest zwei Gepäckträgeranschlüssen, wobei wenigstens ein erster Gepäckträgeranschluß (10) an der gefederten Seite des Fahrzeuges befestigt ist, **dadurch gekennzeichnet, daß** zumindest ein, als zweiter Gepäckträgeranschluß (11) ausgebildeter Gepäckträgeranschluß an der ungefederten Seite des Fahrzeuges befestigt ist, wobei der zweite Gepäckträgeranschluß (11) in Richtung der Wirklinie der Federung beweglich geführt ist und in einer zur Bewegungslinie rechtwinkligen Lagerrichtung im wesentlichen fixierend gelagert ist.

2. Anordnung eines Gepäckträgers an einem gefederten Einspurfahrzeug mit einem Rad, das über eine von einer Teleskopgabel gebildeten Federung gefedert ist, nach Anspruch 1, dadurch gekennzeichnet, daß zwei zweite Gepäckträgeranschlüsse (11) vorhanden sind, die.jeweils parallel zur Wirklinie der Federung verschiebbar gelagert sind.

3. Anordnung eines Gepäckträgers an einem gefederten Einspurfahrzeug nach Anspruch 2, dadurch gekennzeichnet, daß die zweiten Gepäckträgeranschlüsse (11) von zwei Anschlußelementen gebildet sind, die schellenartig an Tauchrohren (7) der Teleskopgabel befestigt sind und an einer Seite einen verlängerten Führungsbereich mit einem Lagerauge aufweisen, in denen jeweils eine Führungsstange (12), die an dem Gepäckträgerrahmen (13) befestigt ist, beweglich geführt ist.

4. Anordnung eines Gepäckträgers an einem gefederten Einspurfahrzeug, nach einem der Ansprüche 1 bis 3, dadurch gekennzeichnet, daß der zweite Gepäckträgeranschluß (11) eine kardanische Lagerung zur beweglichen Führung des Anschlußpunktes aufweist.

5. Anordnung eines Gepäckträgers an einem gefederten Einspurfahrzeug, nach einem der Ansprüche 1 bis 4, dadurch gekennzeichnet, daß zwischen wenigstens einem zweiten Gepäckträgeranschluß (11) und dem Gepäckträgerrahmen (13) mindestens ein Federelement (14) angeordnet ist.

6. Anordnung eines Gepäckträgers an einem gefederten Einspurfahrzeug, nach einem der Ansprüche 1 bis 5, dadurch gekennzeichnet, daß die Lagerrichtung rechtwinklig zur Ebene des Rades angeordnet ist, wobei die zweiten Gepäckträgeranschlüsse so ausgestaltet sind, daß der Gepäckträgerrahmen im Bereich der zweiten Gepäckträgeranschlüsse innerhalb der Ebene des Rades verschiebbar und in der zur Radachse parallelen und zur Wirklinie der Federung rechtwinkligen Lagerrichtung fest mit der ungefederten Seite des Fahrzeugs verbunden ist.

7. Anordnung eines Gepäckträgers an einem gefederten Einspurfahrzeug, nach Anspruch 6, dadurch gekennzeichnet, daß die zweiten Gepäckträgeranschlüsse ein Ausgleichselement aufweisen, das eine Lageänderung der Befestigung des Gepäckträgers rechtwinklig zur Radachse durch Verschieben der Befestigung ermöglicht.

## Claims

1. Assembly of a luggage carrier on a single track vehicle with spring suspension, preferably for a bicycle with spring suspension, with a luggage carrier frame with luggage holder and at least two luggage carrier connectors, whereby at least one first luggage carrier connector (10) is provided for fastening on the sprung side of the vehicle, **characterised in that**
at least one luggage carrier connector is, acting as a second luggage carrier connector (11) is fastened on the unsprung side of the vehicle, whereby the second luggage carrier connector (11) is guided so as to move in the direction of the line of application of the spring and mounted in bearings in a bearing direction perpendicular to the line of motion.

2. Assembly of a luggage carrier on a single track vehicle with spring suspension, comprising a wheel which is sprung via a suspension arrangement formed by a telescopic fork, as claimed in Claim 1, characterised by two second luggage carrier connectors (11), each of which is mounted in bearings in a manner permitting displacement parallel to the line of application of the suspension.

3. Assembly of a luggage carrier on a single track vehicle as claimed in Claim 2, characterised in that the second luggage carrier connectors (11) are formed by two connecting elements which are fastened to sliding tubes (7) of the telescopic fork in the manner of clips and display an extended guide area on one side with a bearing eye, in which a sliding element (12), fastened to the luggage carrier frame (13), is guided in movable fashion.

4. Assembly of a luggage carrier on a single track vehicle as claimed in one of the Claims 1 to 3, characterised in that the second luggage carrier connector (11) comprises cardanic joints for movable guidance of the point of connection.

5. Assembly of a luggage carrier on a single track vehicle as claimed in one of the Claims 1 to 4, characterised in that at least one spring element (14) is arranged between at least one second luggage carrier connector (11) and the luggage carrier frame (13).

6. Assembly of a luggage carrier on a single track vehicle as claimed in one of the Claims 1 to 5, characterised in that the bearing direction is arranged perpendicular to the plane of the wheel, whereby the second luggage carrier connectors are build up in a manner, that the luggage carrier frame in the area of the second luggage carrier connectors is movable within the plane of the wheel and in the direction parallel to the wheel axis and perpendicular to the line of application of the suspension is connected to the unsprung side in fixed fashion.

7. Assembly of a luggage carrier on a single track vehicle as claimed in Claim 6, characterised in that the second luggage carrier connectors display a compensating element permitting a change in position of the luggage carrier mount perpendicular to the wheel axis by displacement of the mount.

## Revendications

1. Arrangement d'un porte-bagages à un véhicule à voie unique suspendu, de préférence à une bicyclette suspendue, avec un cadre de porte-bagages avec logement de bagages et au moins deux raccords de porte-bagages, au moins un premier raccord de porte-bagages (10) étant fixé au côté suspendu du véhicule, **caractérisé** en ce que au moins un raccord de porte-bagages qui est formé comme deuxième raccord de porte-bagages (11), est fixé au côté non suspendu du véhicule, et en ce que le deuxième raccord de porte-bagages (11) est guidé mobilement dans la direction de la ligne d'action de la suspension et est supporté sensiblement fixant dans une direction de support orthogonale à la ligne de mouvement.

2. Arrangement d'un porte-bagages à un véhicule à voie unique suspendu avec une roue qui est suspendue au moyen d'une suspension formée par une fourche télescopique, selon la revendication 1, **caractérisé** en ce que deux deuxièmes raccords de porte-bagages (11) sont présents, qui sont respectivement supportés translatablement parallèlement à la ligne d'action de la suspension.

3. Arrangement d'un porte-bagages à un véhicule à voie unique suspendu selon la revendication 2, **caractérisé** en ce que les deuxièmes raccords de porte-bagages (11) sont formés de deux éléments de raccord, qui sont fixés à la manière de brides, à des tubes plongeur (7) de la fourche télescopique et qui présentent à un côté, une région de guidage prolongée avec un oeil de support dans lesquels est respectivement guidé mobilement une tige conductrice fixée au cadre de porte-bagages (13).

4. Arrangement d'un porte-bagages à un véhicule à voie unique suspendu selon l'une des revendications 1 à 3, **caractérisé** en ce que le deuxième raccord de porte-bagages (11) présente une suspension à la Cardan pour le guidage mobile du point d'attache.

5. Arrangement d'un porte-bagages à un véhicule à voie unique suspendu selon l'une des revendications 1 à 4, **caractérisé** en ce que au moins un élément élastique (14) est arrangé entre au moins un deuxième raccord de porte-bagages (11) et le cadre de porte-bagages (13).

6. Arrangement d'un porte-bagages à un véhicule à voie unique suspendu selon l'une des revendications 1 à 5, **caractérisé** en ce que la direction de support est arrangée orthogonalement au plan de la roue, et en ce que les deuxièmes raccords de porte-bagages sont formés de façon que le cadre de porte-bagages est, dans la région des deuxièmes raccords de porte-bagages, joint translatablement dans le plan de la roue et fixement dans la direction de support qui est parallèle à l'essieu et orthogonale à la ligne d'action de la suspension, au côté non suspendu du véhicule.

7. Arrangement d'un porte-bagages à un véhicule à voie unique suspendu selon la revendication 6, **caractérisé** en ce que les deuxièmes raccord de porte-bagages présentent un élément compensateur qui rend possible un changement de position de la fixation du porte-bagages orthogonal à l'essieu par translation de la fixation.
